Europäisches Patentamt

European Patent Office

Office européen des brevets

(11) Publication number: **0 454 332 A2**

# EUROPEAN PATENT APPLICATION

(21) Application number: **91303312.2**

(22) Date of filing: **15.04.91**

(51) Int. Cl.⁵: **H04Q 3/00, H04Q 3/545**

(30) Priority: **24.04.90 GB 9009188**

(43) Date of publication of application:
**30.10.91 Bulletin 91/44**

(84) Designated Contracting States:
**BE DE DK ES FR GR IT LU NL SE**

(71) Applicant: **GPT LIMITED**
**New Century Park, P.O. Box 53**
**Coventry CV3 1HJ (GB)**

(72) Inventor: **Hayes, Malcolm John**
**46, Arras Blvd**
**Hampton Magna, Warwick CV35 8TT (GB)**
Inventor: **While, Paul**
**1 Wilmslow Drive**
**Orkwood, Derby DE2 2HR (GB)**
Inventor: **Dent, Graham Richard**
**49 St Nicholas Ave**
**Kenilworth, Warwicks CV8 1JW (GB)**

(74) Representative: **MacKenzie, Ian Alastair**
**Robert**
**The General Electric Company, p.l.c. Central**
**Patent Department Wembley Office Hirst**
**Research Center East Lane**
**Wembley Middlesex HA9 7PP (GB)**

(54) Call processing in an intelligent network.

㉗ The invention concerns a method of call processing in an intelligent telecommunications network of the kind comprising a matrix of physical network nodes known as service control points (2) and in which additional services are provided by the execution of service logical programmes (8, 9) residing on the physical network nodes. The invention is characterised in that call processing is divided into three separate segments, namely terminator segments (10, 11) containing the functions which deal with terminating or originating calls to or from a particular subscriber line or trunk circuit, associator segments (12) containing the functions concerning the establishment of a connection between two end parties represented by two terminator segments, and a feature segment for supporting an external interface to the service control points.

EP 0 454 332 A2

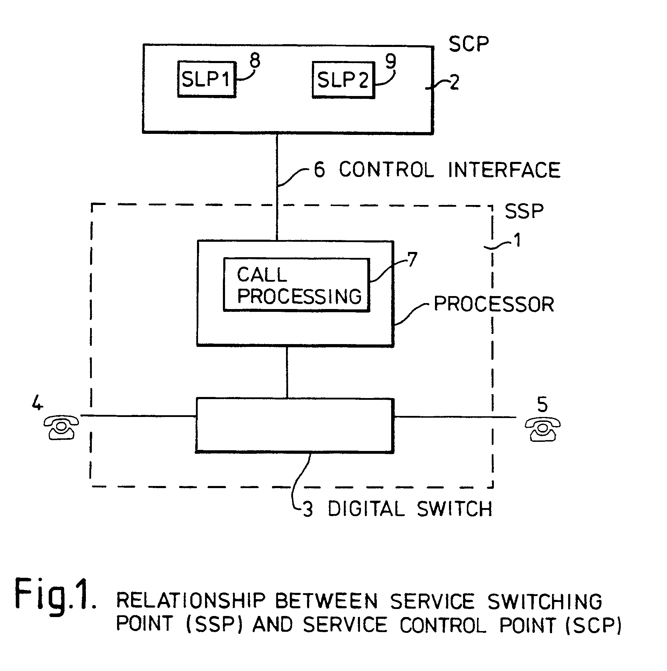

Fig.1. RELATIONSHIP BETWEEN SERVICE SWITCHING POINT (SSP) AND SERVICE CONTROL POINT (SCP)

The present invention concerns telecommunications and in particular Intelligent Networks (IN). In this type of telecommunications network, services which are a supplement to the basic telephony service (for example the ability to make a three party call), are provided by the execution of programs called Service Logic Programs (SLPS) which reside on physical network nodes known as Service Control Points (SCP). These programs provide supplementary services by invoking and controlling functionality contained within modified Stored Program Control exchanges, known as Service Switching Points (SSPs). SLPs are invoked when an SSP detects certain "trigger" conditions during the processing of a call, such as the dialling of a certain sequence of digits.

In order that the SLPs can invoke the capabilities provided by these modified exchanges in as flexible a manner as possible, three things are necessary.

Firstly the SLPs must be provided with an interface to the exchanges through which they can "view" abstract representations of the resources provided by the exchange and invoke operations on those resources.

Secondly operations on these resources must be translated into invocations of functionality contained within the call processing of the SSP. This implies that the call processing must be divided into to re-usable components providing well defined operations.

Thirdly the actions of several SLPs acting on the same call and making requests for operations on resources must be co-ordinated.

A division of call processing in to re-usable components has already been proposed in a paper read at the ISS 84 conference in Florence entitled "The Development of a Generic Call Processing Subsystem". What has not been described however, is how the three aspects described above can be realised.

In order that the present invention may be more readily understood there will now be described a call processing system for a SSP forming part of an IN, which in accordance with the present invention incorporates the three aspects described above, and which is illustrated in the accompanying exemplary drawings in which:

Figure 1 shows a stored program control, digital switch which has been modified to perform the functions of an SSP, connected to a SCP,

Figure 2 shows a chain of segments involved in a call processing procedure,

Figure 3 shows a feature segment,

Figure 4 shows segment creation and linking and

Figure 5 shows the interlinking of segments for a call between two parties with multiple services active.

Referring now to Figure 1, this shows the relationship between a Service Switching Point (SSP) 1 and a Service Control Point (SCP) 2. Also shown is a digital switch 3 and two exemplary handsets 4 and 5. The SSP 1 is connected to SCP 2 by a control interface 6 and includes call processing as indicated at 7, the call processing being under the control of a processor which is not shown.

The call processing software running on the processor controls the operation of the exchange. The capabilities provided by this call processing may be invoked by SLPs 8 and 9 residing on the SCP 2 operating through the interface 6 between the SSP 1 and SCP 2.

The structure of this call processing will now be defined further in order to show how the features described above are realised.

The call processing is divided into separate segments, each offering well defined operations.

There are three types of segments: terminator segments, associator segments and feature segments.

A Terminator Segment contains the functions which deal with terminating or originating calls to or from a particular subscriber line or trunk circuit.

An Associator Segment contains the functions to do with establishing a connection between two end parties represented by two terminator segments.

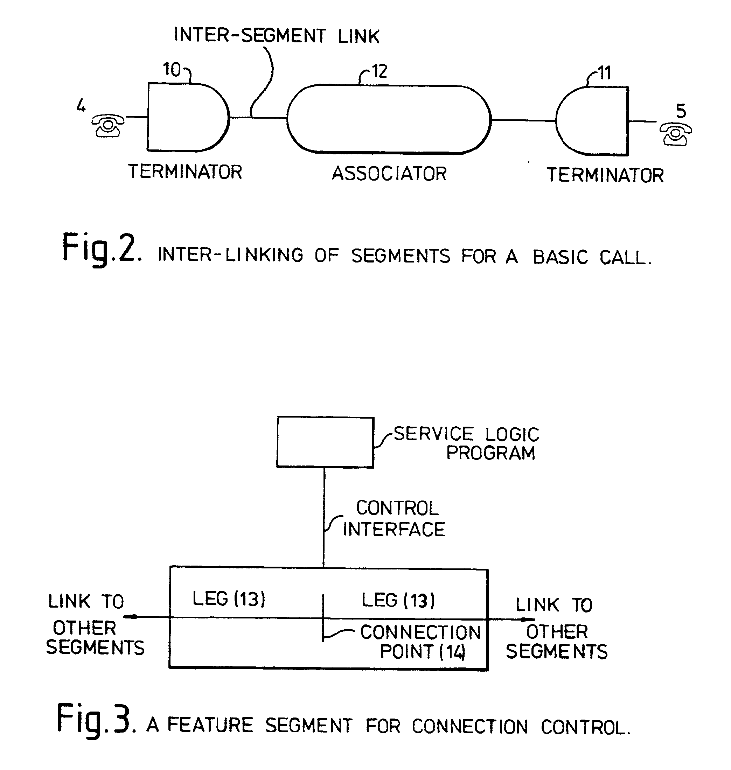

A basic call between two parties would involve the use of one associator segment and two terminator segments joined together to form a "chain" as shown in Figure 2. In this figure terminator segments are shown at 10 and 11 and an associator segment at 12.

Figure 3 shows a feature Segment which is a specific type of connection segment supporting an external interface to the SCP.

An individual feature segment is unaware of other feature segments which may exist within the call.

The feature segment translates requests for operations on logical resources received over the control interface in to invocations of functions provided by the basic connection segments. There are different types of feature segments which support operations on different kinds of logical resources.

The most common type of feature segment will support an interface which can be used for the purposes of creating, controlling and breaking connections across the digital switch 3 shown in Figure 1. This feature segment therefore supports operations on two types of logical resources which are an abstraction of the physical connections. These are legs and connection points. More than one of each type of object can be supported by this type of feature segment.

A leg such as is indicated at 13, represents a logical communications path towards some addressable entity in the network, e.g. an end-user, as viewed from "inside" the feature segment.

A connection point, represented at 14, represents a logical bridge indicating which legs can communicate with each other, as far as this feature segment is concerned.

Together these two types of object form a virtual switch which is totally under the control of the external service logic. Each instance of an SLP will have its own virtual switch represented by a feature segment. By requesting operations on this virtual switch the SLP can request the creation and destruction of switch paths across the digital switch shown in Figure 1.

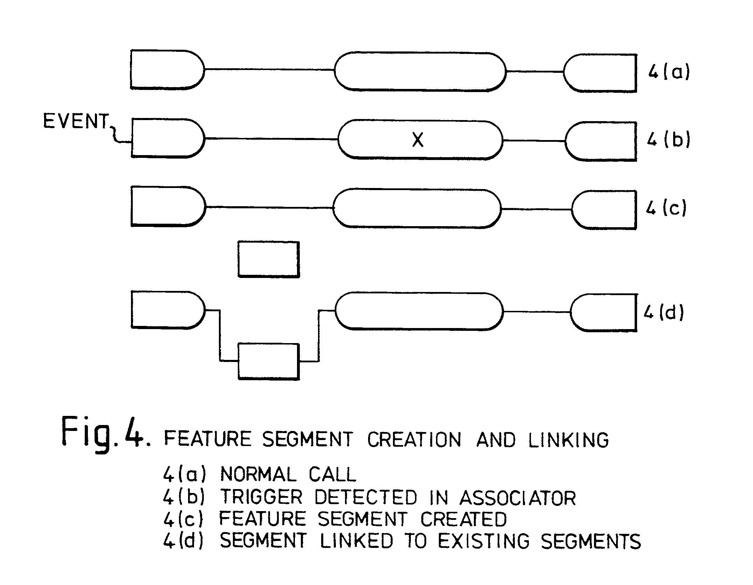

When, during the processing of a call, a trigger condition is detected within either the terminator or associator and the SSP decides that external service logic must be involved in the further processing of the call, a new feature segment must be created to support the external interface. This new segment must then be inter-linked with the existing terminator and associator segments so that via the feature segment, the SLP can influence the processing of the call. This process is shown in Figure 4.

Connection segments of any type are joined together by means of links. Each link corresponds to a signalling and logical transport path between two segments. External events such as signalling messages (answer or clear), pass over these links and along the chain of segments. Each leg defined within a feature segment will have an associated link in the chain of segments. That is, a leg may be considered as the view from within a feature segment looking down a link towards an end-user.

An important requirement which the call processing must meet is the ability to manage multiple instances of service logic operating through multiple feature segments trying to influence the same call. Mechanisms must be provided to prevent unwanted interactions between them.

Feature interaction management is basically about the correct management of events. The precedence of various features for received events must be correctly ordered to avoid unwanted interactions. This can be achieved by the correct inter-linking of feature segments and basic all segments. The feature segment which has the highest priority for events from a particular source must be directly linked with the segment which represents the source of those events. For example, if a particular feature segment has the highest priority for events from an end user then it will be directly linked with the terminator segment which deals with that end user. The process of deciding the priority of a particular feature segment with respect to others can make use of general rules concerning the precedence of feature segments, and specific data concerning the feature segments whose precedence is to be decided. An example of a rule which might be used is that a feature segment which is supporting an interface for an SLP providing a service that rejects unwanted calls (e.g. incoming call screening) must take precedence over a feature segment supporting an SLP providing a service that completes calls (e.g. call diversion). Using this technique of inter-linking segments the actions of several different services acting on the same call may be co-ordinated.

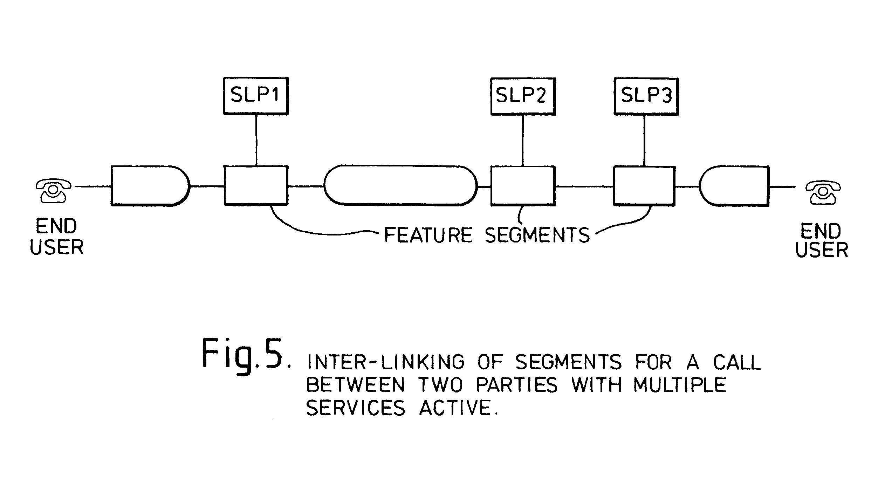

Figure 5 shows the inter-linking between segments which would be required to co-ordinate the actions of several services invoked on behalf of two different end users on the same call.

## Claims

1. A method of call processing in an intelligent telecommunications network of the kind comprising a matrix of physical network nodes known as service control points (2) and in which additional services are provided by the execution of service logical programmes (8,9) residing on the physical network nodes, and characterised in that call processing is divided into three separate segments, namely terminator segments (10, 11) containing the functions which deal with terminating or originating calls to or from a particular subscriber line or trunk circuit, associator segments (12) containing the functions concerning the establishment of a connection between two end parties represented by two terminator segments, and a feature segment for supporting an external interface to the service control points.

2. A method as claimed in Claim 1 and further characterised in that a feature segment is capable of supporting an interface which can be used for the purpose of creating, controlling and breaking connections across a digital switch forming part of the physical network node.

3. A method as claimed in Claim 2 and further characterised in that a feature segment includes a leg which represents a logical communications path towards some addressable entity in the network as viewed from the interior of the feature segment.

4. A method as claimed in any one of the preceding claims and further characterised in that, when during the processing of a call, a trigger condition is detected within either the terminator or associator and the service switching point determines that external service logic must be involved in the further processing of the call, a new feature segment is created to support the external interface which is then interlinked with the existing terminator and associator segments so that via the feature segment, the service logical programme can influence the processing of the call.

5. A method as claimed in Claim 4 and further characterised in that connection segments of any of the three types are joined together by means of links each corresponding to a signalling and logical transport path between two segments.

6. A method as claimed in Claim 5 and further characterised in that the feature segment which has the highest priority for events from a particular source is directly linked with the segment which represents the source of those events.

Fig.1. RELATIONSHIP BETWEEN SERVICE SWITCHING POINT (SSP) AND SERVICE CONTROL POINT (SCP)

INTER-SEGMENT LINK

10⌐

12

11

4

5

TERMINATOR          ASSOCIATOR          TERMINATOR

Fig.2. INTER-LINKING OF SEGMENTS FOR A BASIC CALL.

SERVICE LOGIC
PROGRAM

CONTROL
INTERFACE

LINK TO
OTHER
SEGMENTS

LEG (13)          LEG (13)

CONNECTION
POINT (14)

LINK TO
OTHER
SEGMENTS

Fig.3. A FEATURE SEGMENT FOR CONNECTION CONTROL.

4(a)

EVENT

X

4(b)

4(c)

4(d)

# Fig.4. FEATURE SEGMENT CREATION AND LINKING

4(a) NORMAL CALL
4(b) TRIGGER DETECTED IN ASSOCIATOR
4(c) FEATURE SEGMENT CREATED
4(d) SEGMENT LINKED TO EXISTING SEGMENTS

Fig.5. INTER-LINKING OF SEGMENTS FOR A CALL
BETWEEN TWO PARTIES WITH MULTIPLE
SERVICES ACTIVE.